# EUROPEAN PATENT SPECIFICATION

(11) **EP 1 933 647 B1**
(45) Date of publication and mention of the grant of the patent: **01.04.2009**
(21) Application number: 06810019.7
(22) Date of filing: 10.10.2006
(51) Int. Cl.: A23N 1/00, A47J 19/02

(54) **CITRUS-FRUIT SQUEEZER**
ZITRUSFRUCHTPRESSE
PRESSE-AGRUMES

(30) Priority: 12.10.2005 IT BS20050120
(43) Date of publication of application: 25.06.2008
(73) Proprietor: Poli, Giovanni, 25080 Prevalle (IT)
(72) Inventor: Poli, Giovanni, 25080 Prevalle (IT)
(74) Representative: Tirloni, Bartolomeo
(86) International application number: PCT/IT2006/000726
(87) International publication number: WO 2007/043091

(56) References cited:
- EP-A1- 0 559 260
- WO-A1-20/05041695
- FR-A1- 2 836 016

## Description

The present invention relates to a citrus-fruit squeezer.

The citrus-fruit squeezers are normally used in the food and catering industry field to which, for easiness, the following description will be related, in order to obtain a juice from citrus-fruits, generally oranges, to be added to other foods or to be directly drunk.

The inventive concept which is at the base of this invention can also be applied in other industries, such as for example the cosmetic one and, more generally, in all the cases in which the squeezing of a substantially spherical fruit is required for obtaining a juice.

The state of the art related to citrus-fruit squeezers shows squeezers equipped with two female rotating drums, i.e. equipped with cavities, generally four, in which the portions of the fruit to be squeezed are inserted and of two male rotating drums, i.e. equipped with protruding elements, generally three, shaped so as to be coupled with the cavities existing on the female drums. Each of the aforesaid drums is mounted on a shaft with which it is integral in the movement. Upstream of the various drums, the squeezer is equipped with elements for substantially cutting the fruit by half and, possibly, also with elements for its positioning both before and after the cut. In particular, the two female drums are parallel and placed in the upper part of the squeezer and each one contains, in the respective cavities, one of the halves in which the fruit has been cut by the cutting elements. Each female drum works coupled with one of the male drums, which are also parallelly arranged in the lower part of the squeezer such that, in turn, one of the relative protruding elements is inserted in the cavities of the female drum for squeezing the fruit.

The conventional citrus-fruit squeezers can be further equipped with a feeder which is filled with the fruit for operating the squeezer in a more automatic way, an extractable container for the fruit peels and a container for the juice obtained from the squeezing, in order to facilitate the removal thereof. Document WO-A-2005/041695 dicloses a citrus-fruit squeezer according to the preamble of independent claim 1.

The known squeezers, however, present some drawbacks. First of all, the dimensions of the squeezer are rather considerable due to the presence of four drums and a high-powered motor for moving the four shafts. For example, the dimensional sizes of a conventional squeezer are about 800 x 400 x 400 mm. This involves a difficulty in the movement of the squeezers themselves and also a remarkable bulkiness in terms of space, which is often limited in the public environments, such as bars and restaurants, in which it is mainly used.

Furthermore, the structure full of components makes difficult a partial dismounting and the following remounting of the squeezer for cleaning and maintenance purposes. This is a disadvantage as a poor and non-accurate cleaning of the inner mechanisms of the squeezer over time leads to a decrease of its service life.

An aim of the present invention is to prevent the drawbacks above mentioned with a citrus-fruit squeezer with reduced dimensions and therefore easy and comfortable to carry, arrange and handle also in narrow spaces.

A further aim of this invention is to present a citrus-fruit squeezer which is easy to clean, also in an accurate way, in view of the always stricter regulations relating to the hygienic conditions of the public environments. Still an aim of the invention is to show a citrus-fruit squeezer which is effective and, therefore, which produces a minimum waste quantity and obtains a high quantity of juice.

Finally, an aim of the invention is to provide a citrus-fruit squeezer which is easy to use, also for not very skilled people, which is easy to carry out and with a limited cost.

These and other objects, which will better result during the following description, are attained according to the present invention, by a citrus-fruit squeezer according to independent claim 1.

Further features and advantages will result more apparent from the description of a preferred but non exclusive embodiment of the device shown by way of example in the enclosed drawings, wherein:
- figure 1 shows a front perspective view of a citrus-fruit squeezer according to the invention;
- figure 2 shows a front view of the main components of the squeezer of figure 1;

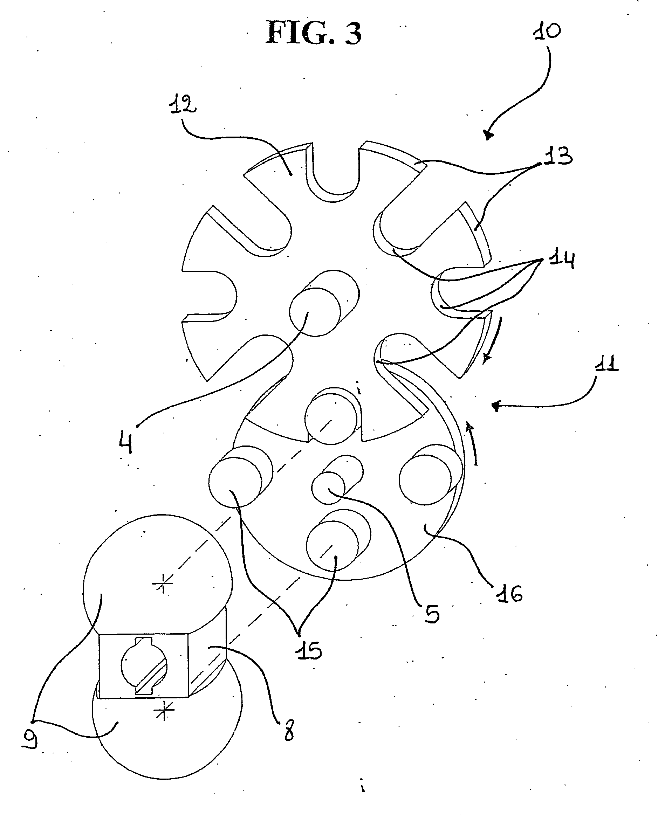

- figure 3 shows an exploded, front perspective view of the transmission means of the squeezer of figure 1 and
- figure 4 shows an exploded, front perspective view of the cutting means of the squeezer of figure 1;
- figure 5 shows a view similar to that of figure 4 in an embodiment variation.

With reference to the mentioned figures, a citrus-fruit squeezer according to the invention is generally shown by numeral 1.

Such squeezer 1 includes a frame 2, a first 4 and a second 5 shafts associated with the frame 2 and movement means 10 operating on the first 4 and the second 5 shafts. According to the invention, the squeezer 1 is characterized in that it includes a single female drum 6 integrally mounted on the first shaft 4, suitable for housing at least a portion of the fruit 3 to be squeezed and a single male drum 8 integrally mounted on the second shaft 5, suitable for cooperating with at least a portion of the female drum 6 for carrying out the squeezing of the fruit 3. In a preferred embodiment of the invention, the first shaft 4 lies on the second shaft 5 and, accordingly, also the female drum 6 is positioned substantially above the male drum 8.

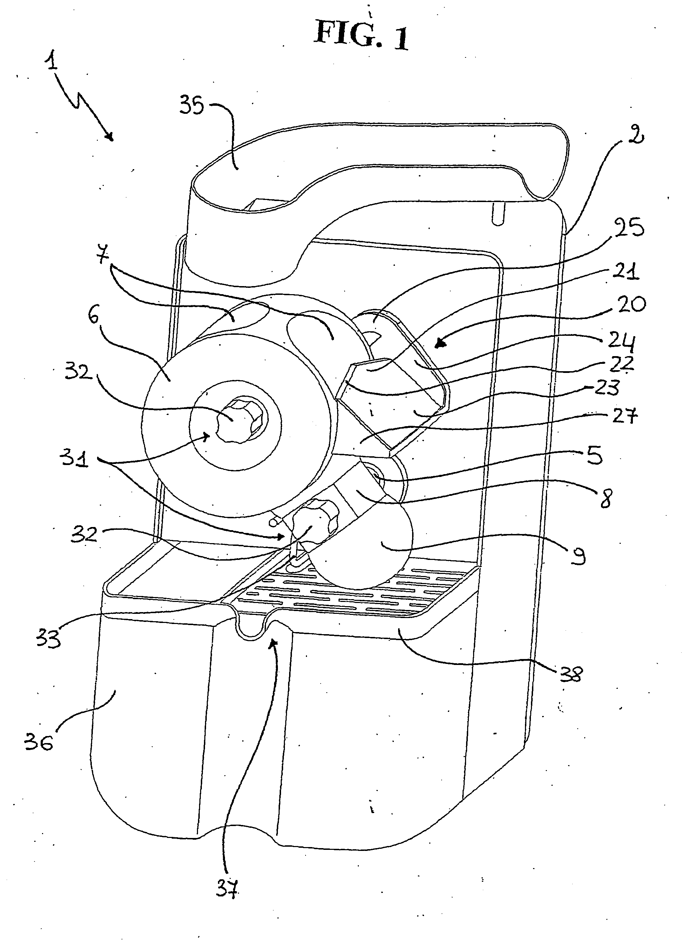

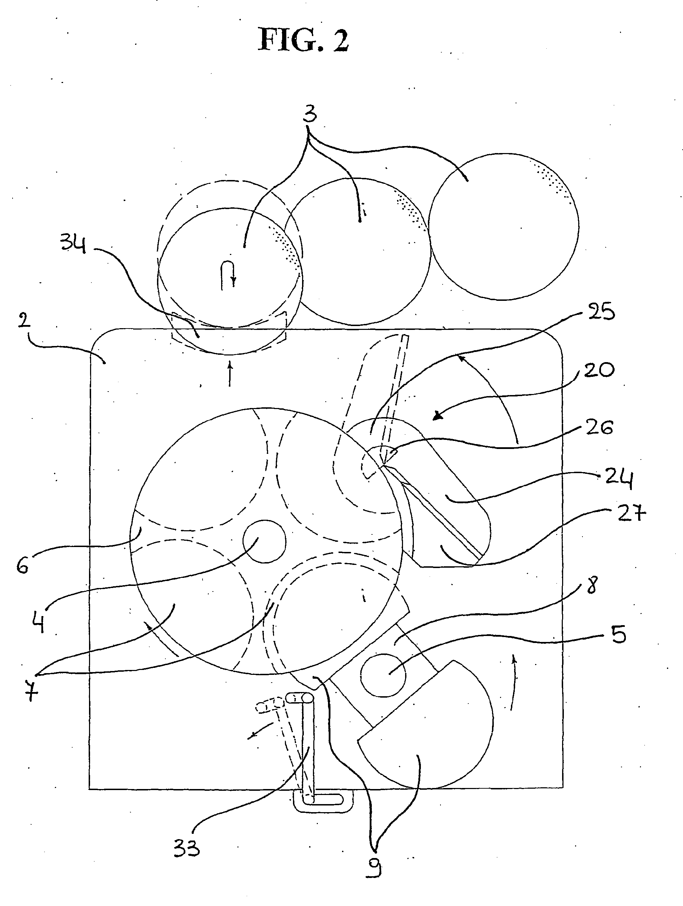

The first and the second 5 shafts can advantageously be positioned in the frame 2 with main axes parallel and lying on an inclined plane with respect to a vertical plane for reducing the dimensions of the squeezer 1 itself and for orientating the juice coming from the squeezing in the collection zone, as it can be seen by figures 1 and 2.

Furthermore, at least one between the female drum 6 and the male drum 8, preferably both of them, can be movably mounted on the respective shafts 4, 5 through fastening means 31 so as to facilitate the dismounting and the following remounting thereof in order to carry out the cleaning or maintenance operations. The mentioned fastening means 31 can include a screw 32 associable with the shaft 4, 5 or an engagement element associable with the shaft 4, 5 by a joint through at least a button.

The female drum 6 shows at least two semi-spherical seats 7 suitable for housing the portions of the fruit 3 to be squeezed, while the male drum 8 shows at least a protruding spherical element 8 suitable for the coupling with the seats 7 of the female drum 6 in order to squeeze the fruit 3.

In a preferred embodiment of the invention, the female drum 6 shows four seat 7 substantially equidistant therebetween and the male drum 8 shows two spherical elements 9, also substantially equidistant therebetween (figures 1 and 2).

Always according to the invention, the citrus-fruit squeezer 1 further includes cutting means 20 arranged in correspondence with the female drum 6 for cutting in two portions the fruit 3 to be squeezed. More particularly, such means 20 include a cutting element 20 suitable for splitting the fruit 3 in a lower portion, which remains at least partially housed in one of the seats 7 of the female drum 6 and in an upper portion and an overturning element 23, associated with the cutting element 21, suitable for holding the upper portion of the fruit 3 in order to position it in the seat 7 subsequent to the one in which the relative lower portion is housed. Obviously, the portions of the fruit 3 to be squeezed are housed in the mentioned seats 7 with the peel substantially contacting the seat 7, such that the pulp to be squeezed can contact the spherical element 9 which protrudes from the male drum 8.

Advantageously the cutting element 21 includes a blade 22 arranged so as to be substantially perpendicular to the advancing direction of the female drum 6 which, preferably, shows a V-profile for facilitating the cut of the fruit 3.

Furthermore, the overturning element 23 is associated with the movement means 10 in order to rotate each half turn of the first shaft 4 from a lowered portion, in which it holds the upper portion of the fruit 3, to an overturning position in which it places the upper portion of the fruit 3 in the seat 7 subsequent to the one in which the relative lower portion is housed.

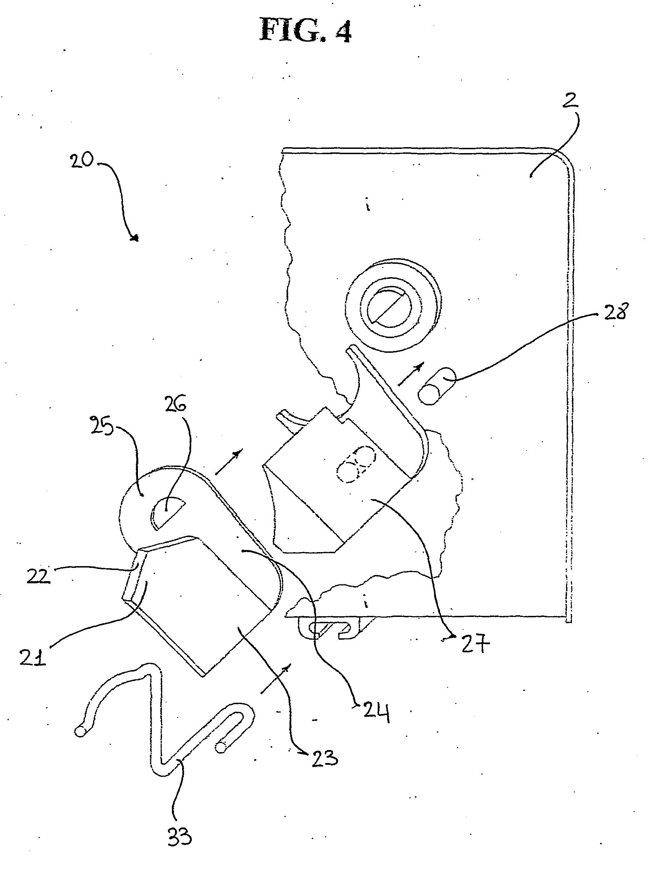

In a preferred embodiment of the invention, the cutting element 21 and the overturning element 23 are produced in a single metal element 24 connected to the movement means 10 for being moved each half turn of the first shaft 4 from the lowered position to the overturning one, as it can be seen in figure 2. In particular, in figure 2 the metal element 24 is shown in a lowered position by a continuous line and in an overturning position by a dashed line. Preferably, furthermore, the metal element 25 shows a bended portion 25 having a hooking portion 26, visible in figure 4, through which it is connected to the movement means 10 for being moved from the lowered position to the overturning one and is held in the seat through the hooking means 26 by the female drum 6, as it can be seen in figures 1 and 2. This is advantageous also because the cutting means 20 can be easily disassembled through the fastening means 31 of the female drum 6. The metal element 24 (or the overturning element 23 when the cutting element 21 and the overturning element 23 itself are separated) is movable from the overturning position to the lowered one through a first resilient element,'generally a spring. Furthermore, as it can be seen in figure 1, 2 and 4, the cutting means 20 also include a guide element 27 placed in correspondence with the metal element 24 and associated in a fixed way, i.e. not movable between the lowered position and the overturning position, with the frame 2 through a pin 28. Such guide element 27 shows a side surface properly shaped for holding the portions of the fruits 3 in the seats 7 during the rotation of the female drum 6 before the squeezing. In addition to this, such element 27 also plays the support function of the metal element 24. The guide element 27 is held in position by the cutting' element 21 or the metal element 24, depending on the embodiment, which in turn is maintained within the seat by the female drum 6 for being able to easily disassemble also the guide element 27 for a cleaning purpose.

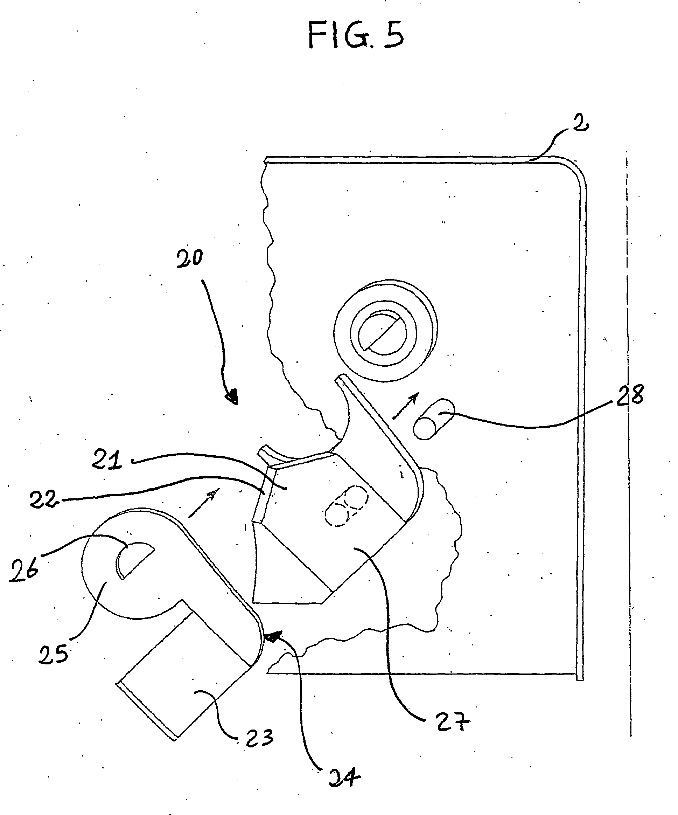

In the embodiment shown in figure 5, the cutting element 21 is of a fixed type, for example fixed to the guide element 27, while the overturning element 23 is movable analogously to what above described. In such a case, the overturning element 23 can advantageously be made of a plastic material.

In a further embodiment, the overturning element 23 can be associated with an operating resilient element, which normally maintains such element in a forward position (overturning).

In this way, during the operation of the device, the advancing of the fruit which is cut by the cutting element 21 causes the overturning element 23 to move back (and primes the actuating spring) until a backward position, for example close to the guide element 27, but when the cut has been ended, the actuating spring again pushes forward the overturning element 23, then replacing in this way the need of a direct connection of the overturning element 23 with the movement means 10.

Always according to the invention, the movement means 10 include an electric motor (not shown) and transmission means 11 for transmitting the movement from the motor to the first 4 and the second shaft 5. Advantageously, the transmission means 11 include a cam 12 having a determined profile 13 and at least a bearing 15 suitable for movably coupling with the cam 12 along its profile 13. It is specified that in the present description, by bearing 15 any element suitable for ensuring a coupling with the cam 12 is intended.

Furthermore, the cam 12 and the bearing 15 are operably interposed between the two shafts 4, 5 for transmitting the movement between the first 4 and the second 5 shafts according to a determined transmission ratio and for slowing the rotation speed of at least one of the two shafts 4, 5 during the squeezing of the fruit 3 and for subsequently speed up again the same by preferably acting such that the seat 7 of the female drum 6 is centred with the spherical element 9 of the male drum 8. More particularly, the motor is directly operating on the second shaft 5 and moves it at a substantially constant speed. The cam 12 and the bearings 15, on the contrary, are respectively associated with the first 4 and the second 5 shafts so as to move the first shaft 4 by exploiting the movement imparted by the motor to the second shaft 5.

Advantageously, the profile 13 of the cam 12 shows at least two U-shaped portions 14 and the transmission means 11 include at least two bearings 15 associated with a disk 16 integrally mounted on the second shaft 5, placed at different radial distances relative to the centre of the disk 16. In this way, it is possible to move the first shaft 4 at a varying speed with respect to the second shaft 5, at least during the squeezing of the fruit 3.

Moreover, the transmission means 11 can include a number of bearings 15 different from the number of the U-shaped portions 14 of the profile 13 of the cam 12, so as to define a transmission ratio between the two shafts 4, 5 other than 1:1.

In particular, a preferred embodiment of the squeezer 1, shown in the enclosed figures, presents transmission means 11 with eight U-shaped portions 14 and four bearings 15 housed on two diameters substantially perpendicular therebetween of the disk 16, such that the bearings 15 housed on a diameter are placed at a radial distance lower than the one at which the bearings 15 housed on the other diameter are placed. This allows, as already mentioned, to halve the whole rotation speed of the first shaft 4 with respect to the second one 5 and to slow the female drum 6 during the squeezing step by keeping the seat 7 and the spherical element 9 coaxial therebetween. In fact, the described transmission means 11 work in such a way that during the squeezing of the fruit 3 the axis of the spherical element 9 is centred with the axis of the seat 7 (namely the axis perpendicular to the centre of the seat 7 itself) which, in turn, is aligned with one of the U-shaped portions 14 of the cam, while the spherical element 9 is aligned with the bearing 15 placed at a lower distance from the centre of the disk 16 on which is mounted.

Alternatively to the cam transmission, the squeezer 1 can show a gear transmission system suitable for carrying out the same functions of the shown cam transmission system, obviously in the possibility limits given by a gear transmission system.

According to the invention, the squeezer 1 can also include a shaped extended element 33 movably associable with the frame 2 through a second resilient element having the function of removing the peel of the fruit 3 when the squeezing has been carried out by the spherical elements 9 of the male drum 8 (figures 1, 2 and 4).

Generally, such extended element 33 can be associated with a peels collector 36 removably associable with the frame 2 such that it can be removed for being emptied and for carrying out cleaning operations (figure 1).

Preferably, the squeezer 1 can further include a paddle 34 placed upstream of the female drum 6 and movably associated with the transmission.means 11 for moving itself each half turn of the first shaft 4 between a loading position, in which it loads the fruit 3 to be squeezed, and a lifted position in which it overturns and drops the fruit 3, obviously still intact, in one of the seats 7 of the female drum 6.

Furthermore, the squeezer 1 can advantageously include a feeder 35 of fruits 3 placed upstream of the female drum 6 and, when existing, also upstream of the paddle 34 in order to operate such squeezer 1 in a more automatic way (figure 1).

The preferred embodiment of the squeezer 1 is completed by means 37 for collecting the juice coming from the squeezed fruits 3, associable with the frame 2. Such means 37 can include a conveyor for the juice which flows according to a substantially vertical direction from the point in which the squeezing occurs, to which, for example, a collecting glass can be associated. Alternatively, the collecting means 37 can include a collector 38 for the juice extractable from the frame 2. In practice, the used materials as well as the dimensions could be any one, depending on the requirements.

Furthermore, all the details can be replaced by other technically equivalent elements.

The invention attains important advantages.

First of all, the citrus-fruit squeezer of the invention shows very reduced dimensions with respect to the traditional squeezers and, accordingly, it results more practical and easier to handle and use. In particular, the dimensions have been substantially reduced of the 40%, as it is about 500 x 250 x 250 mm. This is due to the reduction, in this case the halving, of the number of drums, the reduction of the spherical elements of the second drum (from 3 to 2), the positioning of the two shafts obliquely relative to the vertical plane and the particular structure of the used cam transmission means. The transmission means, structured as described, also allow to exploit at best the torque-motor power ratio and therefore to use a smaller motor with respect to the conventional squeezers.

Secondly, a squeezer according to the invention solves a problem of structural excess with respect to the known citrus-fruit squeezers, as with more or less the half of the devices of the known squeezers, it is possible to obtain the same result.

Furthermore, all the main components of the squeezer, such as the cutting means and the two drums, can be easily disassembled, for example by acting on the fastening means of the two shafts, with remarkable benefits in term of improvement of the cleaning easiness and therefore the service life of the squeezer itself.

A further advantage is the fact that the slowing of the female drum and the power peak occurring in correspondence with the squeezing step are able to produce an effective squeezing and with a poor waste.

Finally, the particular conformation of the two drums and the cutting means ensures a proper positioning of the fruits and, consequently, the possibility of working with fruits of different dimensions.

## Claims

1. Citrus-fruit squeezer (1) including:
a frame (2),
a first shaft (4) associated with said frame (2),
a second shaft (5) associated with said frame (2),
movement means (10) for acting on said first (4) and said second (5) shafts, said movement means (10) including an electric motor and transmission means (11) for transmitting the movement from said electric motor to said first (4) and said second (5) shafts;
a single female drum (6) integrally mounted on said first shaft (4) suitable for housing at least a portion of a fruit (3) to be squeezed, and
a single male drum (9) integrally mounted on said second shaft (5), suitable for cooperating with at least a portion of said female drum (6) for carrying out the squeezing of said fruit (3),
**characterized in that** said transmission means (11) are suitable for defining the transmission ratio of said first (4) to said second (5) shafts and for slowing the rotation speed of at least one between said first (4) and said second (5) shafts during the squeezing of said fruit (3) and subsequently speeding it up again.

2. Squeezer (1) according to claim 1, **characterized in that** said female drum (6) shows at least two semi-spherical seats (7) suitable for housing said portions of said fruit (3).

3. Squeezer (1) according to claim 2, **characterized in that** said male drum (8) shows at least a spherical element (9) suitable for coupling with said seats (7) of said female drum (6) for squeezing said fruit (3).

4. Squeezer (1) according to any one of the preceding claims, **characterized in that** said transmission means (11) include a cam (12) having a determined profile (13) and at least a bearing (15) suitable for movably coupling with said cam (12) along said profile (13).

5. Squeezer (1) according to claim 4, **characterized in that** said cam (12) and said at least one bearing (15) are operably interposed between said first (4) and said second (5) shafts for transmitting the movement between said first (4) and said second (5) shafts according to a determined transmission ratio.

6. Squeezer (1) according to claim 3 and 5, **characterized in that** said cam (12) and said at least one bearing (15) are suitable for acting such that the seat (7) of the female drum (6) is centred with the spherical element (9) of the male drum (8)..

7. Squeezer (1) according to any one of the claims 4 to 6, **characterized in that** said electric motor is directly operating on said second shaft (5) for moving it at a substantially constant speed and **in that** said cam (12) is associated with said first shaft (4), said at least one bearing (15) being associated with said second shaft (5) for moving said first shaft (4).

8. Squeezer (1) according to claim 7, **characterized in that** said profile (13) of said cam (12) shows at least two U-shaped portions (14) and **in that** said transmission means (11) include at least two of said bearings (15) associated with a disk (16) integrally mounted on said second shaft (5), said bearings (15) being placed at different radial distances with respect to the centre of said disk (16) for moving said first shaft (4) at a varying speed relative to said second shaft (5) at least during the squeezing of said fruit (3).

9. Squeezer (1) according to claims 7 or 8, **characterized in that** said transmission means (11) include a number of said bearings (15) other than the number of said U-shaped portions (14) of said profile (13) of said cam (12) for defining said transmission ratio of said first to said second (5) shafts.

10. Squeezer (1) according to claims 8 and 9, **characterized in that** said transmission means (11) include four of said bearings (15) and eight of said U-shaped portions (14) for halving the total rotation speed of said first shaft (4) with respect to said second shaft (5) and **in that** said bearings (15) are housed on two diameters of said disk (16) substantially perpendicular therebetween, such that the bearings (15) housed on one of said diameters are placed at a radial distance lower than the one at which the bearings (15) housed on the other of said diameters are placed, for slowing said female drum (6) during the squeezing of said fruit (3).

11. Squeezer (1) according to claim 10, **characterized in that** during said squeezing, a main axis of said spherical element (9) is aligned to a main axis of the seat (7) with which it is coupled, said seat (7) being aligned with one of said U-shaped profiles (13) of said cam (12) and said spherical element (9) aligned with one of said bearings placed at said lower radial distance with respect to the centre of said disk (16).

12. Squeezer (1) according to claim 1 or 2 or 3, **characterized in that** said transmission means (11) include a gear transmission system.

13. Squeezer (1) according to any one of the preceding claims, **characterized in that** it further includes cutting means (20) placed in correspondence with said female drum (6) and operating on said fruit (3) for cutting it in two portions, said cutting means (20) including a cutting element (21) suitable for splitting said fruit (3) in a lower portion, at least partially housed in one of said seats (7) and in an upper portion and an overturning element (23) suitable for holding said upper portion and positioning said upper portion in the seat (7) subsequent to the one in which said lower portion is housed,
wherein said cutting element (21) and said overturning element (23) are carried out in a single metal element (24) which can be overturned.

14. Squeezer (1) according to claim 2 and the preceding claim, **characterized in that** said metal element (24) shows a folded portion (25) having a hooking portion (26) through which it is connected to said transmission means (11) for being moved, each half turn of said first shaft (4), from said lowered position to said overturning position, said female drum (6) being suitable for holding within the seat said metal element (24) through said hooking portion (26).

15. Squeezer (1) according to claim 14, **characterized in that** said overturning element (23) or said metal element (24) are movable from said overturning position to said lowered position through a first resilient element.

16. Squeezer (1) according to claim 13, **characterized in that** it further includes an operating resilient element associated with said overturning element (23) in order to urge it from said lowered position to said overturning position.

17. Squeezer (1) according to claims 14 or 15, **characterized in that** said cutting means (20) further include a guide element (27) associated with said frame (2) in correspondence with said female drum (6) for holding said portions of said fruits (3) in said seats (7) before the squeezing.

18. Squeezer (1) according to claim 17, **characterized in that** said guide element (27) is held in position by said metal element (24).

19. Squeezer (1) according to claim 13, **characterized in that** said cutting element (21) is fixed.

20. Squeezer (1) according to any one of the preceding claims, **characterized in that** it further includes a shaped extended element (33) movably associable with said frame (2) through a second resilient element suitable for cooperating with said spherical elements (9) for removing the peel of said fruit (3) from said spherical elements (9) after the squeezing of said fruit (3).

## Patentansprüche

1. Zitruspresse (1) umfassend:
einen Rahmen (2),
eine erste Welle (4), die mit dem benannten Rahmen (2) verbunden ist,
eine zweite Welle (5), die mit dem benannten Rahmen (2) verbunden ist,
Bewegungsmittel (10) zum Wirken auf der benannten ersten (4) und zweiten (5) Welle, wobei die benannten Bewegungsmittel (10) einen elektrischen Motor und Übertragungsmittel (11) zum Übertragen der Bewegung vom benannten elektrischen Motor zur benannten ersten (4) und zweiten (5) Welle umfassen; eine einzelne Außentrommel (6), die an der benannten ersten Welle (4) einteilig montiert ist und zur Aufnahme von mindestens eines Teiles einer zu pressenden Frucht (3) geeignet ist, und eine einzelne Innentrommel (9), die an der benannten zweiten Welle (5) einteilig montiert ist und zur Zusammenwirkung mit mindestens einem Teil der benannten Außentrommel (6) zur Pressung der benannten Frucht (3) geeignet ist,
**dadurch gekennzeichnet, daß** die benannten Übertragungsmittel (11) zum Definieren des Übertragungsverhältnis der benannten ersten (4) zur benannten zweiten (5) Welle und zur Verzögerung der Drehgeschwindigkeit von mindestens einer von der benannten ersten (4) und zweiten (5) Welle während der Pressung der benannten Frucht (3) und dann wiederum zu deren Beschleunigung geeignet sind.

2. Zitruspresse (1) nach Anspruch 1, **dadurch gekennzeichnet, daß** die benannte Außentrommel (6) mindestens zwei halbkugelige Sitze (7) zur Aufnahme der benannten Teile der benannten Frucht (3) aufweist.

3. Zitruspresse (1) nach Anspruch 2, **dadurch gekennzeichnet, daß** die benannte Innentrommel (8) mindestens ein kugeliges Element (9) zur Kopplung mit den benannten Sitzen (7) der benannten Außentrommel (6) zur Pressung der benannten Frucht (3) aufweist.

4. Zitruspresse (1) nach irgendeinem der vorhergehenden Ansprüche, **dadurch gekennzeichnet, daß** die benannten Übertragungsmittel (11) einen Nocken (12) mit einer bestimmten Kontur (13) und mindestens einen Lager (15) zur beweglichen Kopplung mit dem benannten Nocken (12) entlang der benannten Kontur (13) umfassen.

5. Zitruspresse (1) nach Anspruch 4, **dadurch gekennzeichnet, daß** der benannte Nocken (12) und der benannte mindestens eine Lager (15) zwischen der benannten ersten (4) und zweiten (5) Welle operativ liegen, zum Übertragen der Bewegung zwischen der benannten ersten (4) und zweiten (5) Welle gemäß einem bestimmten Übertragungsverhältnis.

6. Zitruspresse (1) nach Anspruch 3 und 5, **dadurch gekennzeichnet, daß** der benannte Nocken (12) und der benannte mindestens eine Lager (15) zum Wirken geeignet sind, so daß der Sitz (7) der Außentrommel (6) mit dem kugeligen Element (9) der Innentrommel (8) zentriert ist.

7. Zitruspresse (1) nach irgendeinem der Ansprüche 4 bis 6, **dadurch gekennzeichnet, daß** der benannte elektrische Motor unmittelbar auf der benannten zweiten Welle (5) wirkt, um diese mit einer wesentlich konstanten Geschwindigkeit zu bewegen, und daß der benannte Nocken (12) mit der benannten ersten Welle (4) verbunden ist, wobei der benannte mindestens eine Lager (15) mit der benannten zweiten Welle (5) zur Bewegung der benannten ersten Welle (4) verbunden ist.

8. Zitruspresse (1) nach Anspruch 7, **dadurch gekennzeichnet, daß** die benannte Kontur (13) des benannten Nockens (12) mindestens zwei U-förmige Teile aufweist, und daß die benannten Übertragungsmittel (11) mindestens zwei von den benannten Lagern (15) umfassen, die mit einer an der benannten zweiten Welle (5) einteilig montierten Scheibe (5) verbunden sind, wobei die benannten Lager (15) in unterschiedlichen Radialabständen von der Mitte der benannten Scheibe (16) liegen, zur Bewegung der benannten ersten Welle (4) mit einer variablen Geschwindigkeit bezüglich der benannten zweiten Welle (5) mindestens während der Pressung der benannten Frucht (3).

9. Zitruspresse (1) nach den Ansprüchen 7 oder 8, **dadurch gekennzeichnet, daß** die benannten Übertragungsmittel (11) eine andere Anzahl von den benannten Lagern (15) als die Anzahl der oben genannten U-förmigen Teile (14) der benannten Kontur (13) des benannten Nockens (12) zum Definieren des benannten Übertragungsverhältnisses der benannten ersten zur benannten zweiten (5) Welle umfassen.

10. Zitruspresse (1) nach den Ansprüchen 8 und 9, **dadurch gekennzeichnet, daß** die benannten Übertragungsmittel (11) vier der benannten Lager (15) und acht der benannten U-förmigen Teile (15) zum Halbieren der Gesamtdrehgeschwindigkeit der benannten ersten Welle (4) bezüglich der benannten zweiten Welle (5) umfassen, und daß die benannten Lager (15) an zwei Durchmessern der benannten Scheibe (16) wesentlich orthogonal dazwischen liegen, so daß die an einem der benannten Durchmesser aufgenommenen Lager (15) in einem niedrigeren Radialabstand liegen als der Radialabstand der an dem anderen der benannten Durchmesser liegenden Lager (15), zur Verzögerung der benannten Außentrommel (6) während der Pressung der benannten Frucht (3).

11. Zitruspresse (1) nach Anspruch 10, **dadurch gekennzeichnet, daß** während des benannten Pressungsschrittes eine Hauptachse des benannten kugeligen Elementes (9) mit einer Hauptachse des Sitzes (7), mit dem es verbunden ist, fluchtrecht ist, wobei der benannte Sitz (7) mit einem der benannten U-förmigen Konturen (13) des benannten Nockens (12) fluchtrecht ist und das benannte kugelige Element (9) mit einem der benannten Lager im benannten niedrigeren Radialabstand von der Mitte der benannten Scheibe (16) fluchtrecht ist.

12. Zitruspresse (1) nach Anspruch 1 oder 2 oder 3, **dadurch gekennzeichnet, daß** die benannten Übertragungsmittel (11) ein Zahnradgetriebe umfassen.

13. Zitruspresse (1) nach irgendeinem der vorhergehenden Ansprüche, **dadurch gekennzeichnet, daß** sie Schneidmittel (20) weiter umfasst, die an der benannten Außentrommel (6) liegen und auf der benannten Frucht (3) wirken, um die letztere in zwei Teile zu schneiden, wobei die benannten Schneidmittel (20) ein Schneidelement (21) zum Teilen der benannten Frucht (3) in einem Unterteil, der mindesteins teilweise in einem der benannten Sitze (7) aufgenommen ist, und in einem Oberteil, und ein Umkippelement (23) zum Halten des benannten Oberteils und zum Positionieren des benannten Oberteils in dem Sitz (7), der sich nach dem den benannten Unterteil aufnehmenden Sitz befindet,
worin das benannte Schneidelement (21) und das benannte Umkippelement (23) in einem einteiligen kippbaren Metallelement (24) hergestellt werden.

14. Zitruspresse (1) nach Anspruch 2 und dem vorhergehenden Anspruch, **dadurch gekennzeichnet, daß** das benannten Metallelement (24) einen Faltenteil (25) mit einem Einhakenteil (26) aufweist, durch den es mit den benannten Übertragungsmitteln (11) verbunden ist, zu dessen Bewegung bei jeder Halbdrehung der benannten ersten Welle (4) von der benannten abgesenkten Stellung zur benannten Umkippstellung, wobei die benannte Außentrommel (6) zum Halten im Sitz des benannten Metallelementes (24) durch den benannten Einhakenteil (26) geeignet ist.

15. Zitruspresse (1) nach Anspruch 14, **dadurch gekennzeichnet, daß** das benannte Umkippelement (23) oder das benannte Metallelement (24) von der benannten Umkippstellung zur benannten abgesenkten Stellung durch ein erstes Federelement bewegbar sind.

16. Zitruspresse (1) nach Anspruch 13, **dadurch gekennzeichnet, daß** sie ein wirkendes Federelement weiter umfasst, das mit dem benannten Umkippelement (23) verbunden ist, um es von der benannten abgesenkten Stellung zur benannten Umkippstellung zu verschieben.

17. Zitruspresse (1) nach den Ansprüchen 14 oder 15, **dadurch gekennzeichnet, daß** die benannten Schneidmittel (20) ein Führungselement (27) weiter umfassen, das mit dem benannten Rahmen (2) an der benannten Außentrommel (6) verbunden ist, zum Halten der benannten Teile der benannten Früchte (3) in den benannten Sitzen (7) vor der Pressung.

18. Zitruspresse (1) nach Anspruch 17, **dadurch gekennzeichnet, daß** das benannte Führungselement (27) durch das benannte Metallelement (24) in Position gehalten wird.

19. Zitruspresse (1) nach Anspruch 13, **dadurch gekennzeichnet, daß** das benannte Schneidelement (21) ortsfest ist.

20. Zitruspresse (1) nach irgendeinem der vorhergehenden Ansprüche, **dadurch gekennzeichnet, daß** sie ein geformtes erweitertes Element (33) weiter umfasst, das mit dem benannten Rahmen (2) bewegbar verbindbar ist, durch ein zweites Federelement, das zur Zusammenwirkung mit den benannten kugeligen Elementen (9) geeignet ist, um die Schale der benannten Frucht (3) von den benannten kugeligen Elementen (9) nach der Pressung der benannten Frucht (3) zu entfernen.

## Revendications

1. Presse-agrumes (1) comprenant:
un châssis (2),
un premier arbre (4) associé audit châssis (2),
un deuxième arbre (5) associé audit châssis (2),
des moyens de mouvement (10) aptes à agir sur ledit premier (4) et ledit deuxième (5) arbre, lesdits moyens de mouvement (10) comprenant un moteur électrique et des moyens de transmission (11) aptes à transmettre le mouvement dudit moteur électrique audit premier (4) et audit deuxième (5) arbre;
un tambour femelle (6) individuel monté de façon solidaire sur ledit premier arbre (4) et apte à loger au moins une portion d'un fruit (3) à presser, et
un tambour mâle (9) individuel monté de façon solidaire sur ledit deuxième arbre (5) et apte à coopérer avec au moins une portion dudit tambour femelle (6) pour presser ledit fruit (3),
**caractérisé en ce que** lesdits moyens de transmission (11) sont aptes à définir le rapport de transmission entre ledit premier (4) et ledit deuxième (5) arbre et à ralentir la vitesse de rotation d'au moins un entre ledit premier (4) et ledit deuxième (5) arbre pendant le pressurage dudit fruit (3) et ensuite l'accélérer de nouveau.

2. Presse-agrumes (1) selon la revendication 1, **caractérisé en ce que** ledit tambour femelle (6) présente au moins deux sièges hémisphériques (7) aptes à loger lesdites portions dudit fruit (3).

3. Presse-agrumes (1) selon la revendication 2, **caractérisé en ce que** ledit tambour mâle (8) présente au moins un élément sphérique (9) apte à se coupler avec lesdits sièges (7) dudit tambour femelle (6) pour le pressurage dudit fruit (3).

4. Presse-agrumes (1) selon une quelconque des revendications précédentes, **caractérisé en ce que** lesdits moyens de transmission (11) comprennent une came (12) ayant un certain profil (13) et au moins un roulement (15) apte à se coupler de façon mobile avec ladite came (12) le long dudit profil (13).

5. Presse-agrumes (1) selon la revendication 4, **caractérisé en ce que** ladite came (12) et ledit au moins un roulement (15) sont placés de façon opérationnelle entre ledit premier (4) et ledit deuxième (5) arbre pour transmettre le mouvement entre ledit premier (4) et ledit deuxième (5) arbre selon un certain rapport de transmission.

6. Presse-agrumes (1) selon la revendication 3 et 5, **caractérisé en ce que** ladite came (12) et ledit au moins un roulement (15) sont aptes à agir de sorte que le siège (7) du tambour femelle (6) soit centré avec l'élément sphérique (9) du tambour mâle (8).

7. Presse-agrumes (1) selon une quelconque des revendications 4 à 6, **caractérisé en ce que** ledit moteur électrique agit directement sur ledit deuxième arbre (5) pour le déplacer à une vitesse substantiellement constante, et **en ce que** ladite came (12) est associée audit premier arbre (4), ledit au moins un roulement (15) étant associé audit deuxième arbre (5) pour déplacer ledit premier arbre (4).

8. Presse-agrumes (1) selon la revendication 7, **caractérisé en ce que** ledit profil (13) de ladite came (12) montre au moins deux portions en U (14), et **en ce que** lesdits moyens de transmission (11) comprennent au moins deux desdits roulements (15) associés à un disque (16) monté de façon solidaire sur ledit deuxième arbre (5), lesdits roulements (15) étant placés à des distances radiales différentes par rapport au centre dudit disque (16) pour déplacer ledit premier arbre (4) à une vitesse variable par rapport audit deuxième arbre (5) au moins pendant le pressurage dudit fruit (3).

9. Presse-agrumes (1) selon les revendications 7 ou 8, **caractérisé en ce que** lesdits moyens de transmission (11) comprennent un nombre desdits roulements (15) différent du nombre desdites portions en U (14) dudit profil (13) de ladite came (12) pour définir ledit rapport de transmission entre ledit premier et ledit deuxième (5) arbre.

10. Presse-agrumes (1) selon les revendications 8 et 9, **caractérisé en ce que** lesdits moyens de transmission (11) comprennent quatre desdits roulements (15) et huit desdites portions en U (14) pour réduire de moitié la vitesse de rotation totale dudit premier arbre (4) par rapport audit deuxième arbre (5), et **en ce que** lesdits roulements (15) sont logés sur deux diamètres dudit disque (16) substantiellement perpendiculaires entre ces diamètres, de sorte que les roulements (15) logés sur l'un desdits diamètres sont placés à une distance radiale inférieure par rapport à celle à laquelle sont placés les roulements (15) logés sur l'autre desdits diamètres, pour ralentir ledit tambour femelle (6) pendant le pressurage dudit fruit (3).

11. Presse-agrumes (1) selon la revendication 10, **caractérisé en ce que** pendant ledit pressurage un axe principal dudit élément sphérique (9) est aligné à un axe principal du siège (7) avec lequel il est couplé, ledit siège (7) étant aligné à un desdits profils en U (13) de ladite came (12) et ledit élément sphérique (9) étant aligné à un desdits roulements placés à ladite distance radiale inférieure par rapport au centre dudit disque (16).

12. Presse-agrumes (1) selon la revendication 1 ou 2 ou 3, **caractérisé en ce que** lesdits moyens de transmission (11) comprennent une transmission à engrenage.

13. Presse-agrumes (1) selon une quelconque des revendications précédentes, **caractérisé en ce que** il comprend en outre des moyens de coupe (20) placés sur ledit tambour femelle (6) et agissant sur ledit fruit (3) pour le couper en deux portions, lesdits moyens de coupe (20) comprenant un élément de coupe (21) apte à diviser ledit fruit (3) en une portion inférieure, logée au moins partiellement dans l'un desdits sièges (7), et une portion supérieure, et un élément de renversement (23) apte à maintenir ladite portion supérieure et à positionner ladite portion supérieur dans le siège (7) suivant celui dans lequel est logée ladite portion inférieure,
où ledit élément de coupe (21) et ledit élément de renversement (23) sont réalisés dans un élément métallique (24) unique pouvant être renversé.

14. Presse-agrumes (1) selon la revendication 2 et la revendication précédente, **caractérisé en ce que** ledit élément métallique (24) présente une portion repliée (25) ayant une portion d'accrochage (26) par laquelle il est relié auxdits moyens de transmission (11) pour être déplacé à chaque demi-tour dudit premier arbre (4) de ladite position baissée à ladite position renversée, ledit tambour femelle (6) étant apte à maintenir dans le siège ledit élément métallique (24) au moyen de ladite portion d'accrochage (26).

15. Presse-agrumes (1) selon la revendication 14, **caractérisé en ce que** ledit élément de renversement (23) ou ledit élément métallique (24) sont déplaçables de ladite position renversée à ladite position baissée au moyen d'un premier élément résilient.

16. Presse-agrumes (1) selon la revendication 13, **caractérisé en ce que** il comprend en outre un élément résilient opérationnel associé audit élément de renversement (23) afin de le déplacer de ladite position baissée à ladite position renversée.

17. Presse-agrumes (1) selon les revendications 14 ou 15, **caractérisé en ce que** lesdits moyens de coupe (20) comprennent en outre un élément de guide (27) associé audit châssis (2) sur ledit tambour femelle (6) pour maintenir lesdits portions desdits fruits (3) dans lesdits sièges (7) avant le pressurage.

18. Presse-agrumes (1) selon la revendication 17, **caractérisé en ce que** ledit élément de guide (27) est maintenu en position par ledit élément métallique (24).

19. Presse-agrumes (1) selon la revendication 13, **caractérisé en ce que** ledit élément de coupe (21) est fixe.

20. Presse-agrumes (1) selon une quelconque des revendications précédentes, **caractérisé en ce que** il comprend en outre un élément étendu formé (33) pouvant être associé de façon mobile audit châssis (2) au moyen d'un deuxième élément résilient apte à coopérer avec lesdits éléments sphériques (9) pour éliminer la peau dudit fruit (3) desdits éléments sphériques (9) après le pressurage dudit fruit (3).
